# DEMANDE DE BREVET EUROPEEN

(11) **EP 1 176 820 A1**
(43) Date de publication de la demande: **30.01.2002**
(21) Numéro de dépôt: 01401892.3
(22) Date de dépôt: 13.07.2001
(51) Int. Cl.: H04N 5/76

(54) **Dispositif de sélection de séquences audio et/ou vidéo**

(30) Priorité: 28.07.2000 FR 0010012
(71) Demandeur: SAGEM S.A., 75015 Paris (FR)
(72) Inventeur: Cummings, John, 78600 Maisons-Laffitte (FR); Mortreux, Bruno, 76530 Les Essarts (FR)
(74) Mandataire: Schmit, Christian Norbert Marie

(57) **Abrégé**

L'invention concerne un dispositif de sélection de séquences audio et/ou vidéo pour décodeur de télévision numérique (100).

Des paquets de données audio et/ou vidéo font l'objet d'un marquage, la séquence sélectionnée étant constituée par l'ensemble des paquets de données reçues entre un paquet de données ayant été désigné comme marqueur de début de sélection, et un paquet de données ayant été désigné comme marqueur de fin de sélection. Les séquences ainsi sélectionnées sont disponibles dans un module de mémoire (112) du décodeur de télévision numérique (100).

## Description

La présente invention a pour objet un dispositif de sélection de séquences audio et/ou vidéo. De préférence, le dispositif selon l'invention est incorporé dans un appareil de type décodeur pour télévision numérique. Le dispositif selon l'invention permet à un utilisateur du décodeur de télévision numérique notamment d'enregistrer des séquences audio et/ou vidéo, émises par exemple par des opérateurs de télévision, cette opération d'enregistrement étant accompagnée, instantanément ou ultérieurement, d'une opération de marquage de certaines séquences audio et/ou vidéo afin de mettre ces séquences en évidence pour éventuellement leur faire subir différents traitements.

D'une façon générale, le domaine de l'invention est celui de la télévision numérique. Dans ce domaine, des décodeurs de télévision numérique sont utilisés, notamment afin d'accéder à un ensemble de chaînes de télévision cryptées. Les décodeurs de télévision sont des organes interfaces entre des systèmes de transmission de signaux de télévision, notamment de signaux de télévision numérique au format MPEG et DVB, et des moniteurs de visualisation. Souvent, le moniteur comporte en lui-même des circuits de décodage de ces signaux de télévision mais ce n'est pas une obligation. Les signaux échangés sont le plus souvent des signaux numériques, mais un décodeur peut aussi avoir des facultés de traitement de signaux analogiques. Les moyens de transmission qui transmettent les émissions de télévision à ces décodeurs/récepteurs sont soit des moyens de transmission aériens classiques, soit des câbles coaxiaux, voire optiques, soit des satellites de réémission qui desservent une région.

Le plus souvent, les décodeurs de télévision numérique sont aujourd'hui équipés d'un module de mémoire d'une grande capacité, de type disque dur, qui permet de mémoriser notamment un ensemble d'informations relatives au flux audio et/ou vidéo émis par différents opérateurs de télévision et reçu par le décodeur de téléviseur numérique. Ce module de mémoire est par exemple utilisé dans des applications dites de vidéo différée : ces applications permettent à un utilisateur d'un décodeur de téléviseur numérique de visionner une émission de télévision avec un léger retard par rapport à sa transmission effective. A cet effet, une application de gestion du module de mémoire, contenue dans une mémoire de programmes du décodeur de télévision numérique, gère un ensemble d'opérations d'écriture et de lecture du module de mémoire. Ces opérations rendent possible une opération d'écriture à un instant t1 simultanément à une opération de lecture d'informations qui avaient été écrites dans le module de mémoire à un instant t0 antérieur à l'instant t1.

Les modules de mémoire de grande capacité qui sont désormais présents dans les décodeurs numériques ne remplacent cependant pas encore les magnétoscopes analogiques classiques qui utilisent des bandes magnétiques comme support d'enregistrement. En effet, si les modules de mémoire peuvent aujourd'hui atteindre une capacité d'enregistrement d'environ quatre heures, ils ne sont pas aussi manipulables et faciles d'utilisation qu'une cassette vidéo classique à bande magnétique, qui peut être facilement et à volonté insérée ou éjectée d'un magnétoscope classique. Par ailleurs, le coût d'un disque dur de grande capacité demeure nettement plus élevé que celui d'une cassette vidéo classique à bande magnétique. En conséquences, peu d'applications destinées à l'exploitation de ce module de mémoire par l'utilisateur du décodeur ont été proposées.

Le dispositif selon l'invention répond à cette carence. En effet, le dispositif selon l'invention propose une nouvelle fonctionnalité du décodeur de télévision numérique qui utilise les grandes capacités de mémorisation du module de mémoire compris dans le décodeur pour étendre les capacités du décodeur numérique à une nouvelle forme d'utilisation. En outre, le dispositif selon l'invention tire partie du fait que les informations contenues dans le module de mémoire du décodeur numérique sont par définition de nature numérique ; le dispositif selon l'invention n'aurait donc pas pu être mis en oeuvre au sein d'un magnétoscope classique utilisant des supports d'enregistrement à bandes magnétiques.

Dans le dispositif selon l'invention, des moyens de marquage, ou marqueurs, sont mis en oeuvre. Le flux d'informations audio et vidéo reçu par le décodeur de télévision numérique est composé, après son passage dans un module de réception du décodeur qui numérise l'ensemble des signaux reçus, d'un ensemble de paquets de données audio et vidéo, chaque paquet de données vidéo correspondant à une image, et chaque paquet de données audio correspondant à un son associé à une image. Par moyen de marquage, on désigne des moyens qui permettent de repérer un paquet de données vidéo et/ou un paquet de données audio qui constitue le début ou la fin d'une séquence qui a été sélectionnée par l'utilisateur du décodeur de télévision numérique. Dans la pratique, ces moyens de marquage permettent de retrouver une séquence vidéo et/ou audio, composée de plusieurs paquets de données audio reçus consécutivement, dans le module de mémoire du décodeur, ces séquences aillant été préalablement sélectionnées grâce aux moyens de marquage. Une séquence sélectionnée est donc comprise entre un marqueur de début de sélection, qui désigne un paquet de données audio et/ou vidéo indiquant le début d'une séquence sélectionnée, et un marqueur de fin de sélection, qui désigne un paquet de données audio et/ou vidéo indiquant la fin d'une séquence sélectionnée.

L'invention concerne donc un dispositif de sélection de séquences audio et/ou vidéo pour décodeur de télévision numérique, ledit décodeur (100) recevant un ensemble de séquences audio et vidéo sous la forme d'un flux de signaux audio et vidéo et comportant notamment un module de mémoire de données de type disque dur, un microprocesseur et une mémoire de programmes, ledit dispositif étant caractérisé en ce qu'il comporte des moyens pour marquer des paquets de données audio et/ou vidéo reçues par le décodeur, des moyens pour mémoriser dans le module de mémoire du décodeur la ou les séquences audio et/ou vidéo reçues entre les paquets de données ainsi marqués, et une table de valeurs qui permet de mémoriser une adresse de début de sélection et une adresse de fin de sélection pour chaque séquence ainsi sélectionnée.

Les moyens pour marquer des paquets de données audio et/ou vidéo sont mis en oeuvre directement sur le flux de signaux audio et vidéo reçus par le décodeur, ou bien sur des séquences de signaux audio et vidéo préalablement enregistrées sur le module de mémoire du décodeur. Le dispositif selon l'invention comprend en outre des moyens pour modifier les adresses de début de sélection et les adresses de fin de sélection mémorisées dans la table de valeurs pour faire évoluer le contenu des séquences sélectionnées, ou pour déplacer les séquences sélectionnées au sein du module de mémoire. Lorsque plusieurs séquences audio et /ou vidéo ont été sélectionnées par l'utilisateur du décodeur grâce aux moyens de marquage, l'ensemble des séquences ainsi sélectionnées peut être restitué sur des organes de restitution de type téléviseur de façon continue, c'est à dire les unes à la suite des autres sans interruption entre deux séquences sélectionnées. Dans le but d'optimiser l'espace limité du module de mémoire, le dispositif selon l'invention comprend des moyens pour éliminer de ce module de mémoire un ensemble de signaux audio et/ou vidéo qui n'ont pas fait l'objet d'une sélection. Dans un mode de réalisation préféré, le dispositif selon l'invention comprend des moyens pour marquer un paquet de données d'un signal audio indépendamment du paquet de données d'un signal vidéo reçu par le décodeur simultanément au paquet de données du signal audio et vice et versa. Afin de faciliter l'utilisation du dispositif selon l'invention, des moyens sont mis en oeuvre pour indiquer à un utilisateur qu'il est en train de sélectionner une séquence de signaux audio et/ou vidéo. Enfin, les différentes opérations qui peuvent être mis en oeuvre au moyen du dispositif selon l'invention peuvent être déclenchées depuis une télécommande.

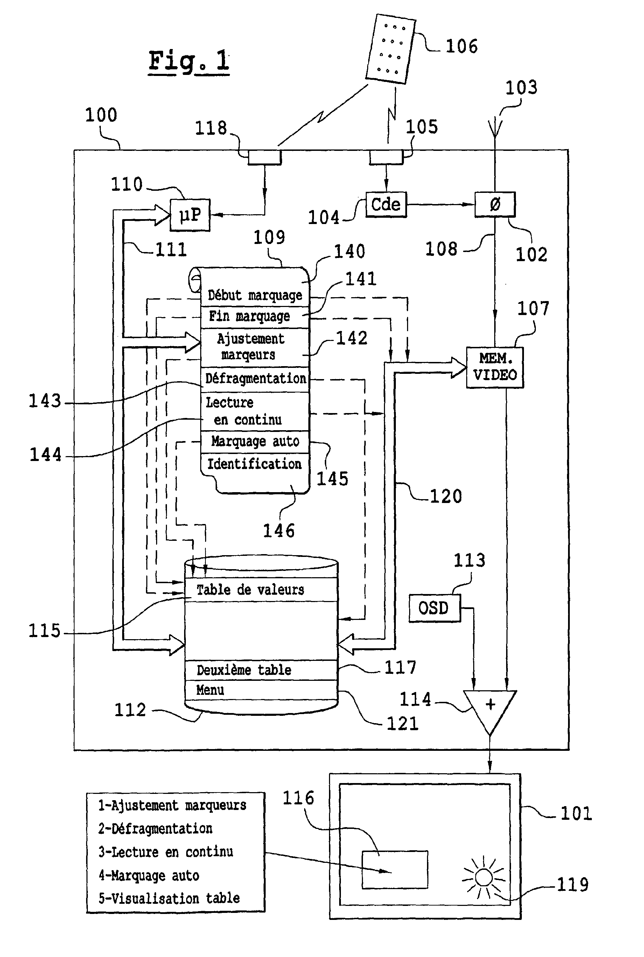

L'invention et ses différentes applications seront mieux comprises à la lecture de la description qui suit et à l'examen de la figure qui l'accompagne. Celles-ci ne sont présentées qu'à titre indicatif et nullement limitatif de l'invention. La figure 1, unique, montre un exemple de réalisation possible du dispositif selon l'invention au sein d'un décodeur de télévision numérique.

La figure 1 montre un décodeur de télévision numérique 100 connecté à un téléviseur 101. Le décodeur 100 comporte un module de réception 102 de signaux télévisuels, qui reçoit via une antenne 103 un flux d'informations. Ce flux d'informations est composé notamment de signaux audio et vidéo destinés à être diffusés éventuellement après un décodage spécifique du décodeur de téléviseur numérique. Le module de réception 102 pourrait également être connecté à un réseau de télévision câblé ou un système de réception par satellite. Par ailleurs, le module de réception 102 est connecté à un circuit de commande 104 du module de réception 102. Le circuit de commande 104 indique au module de réception 102 quel programme de télévision il doit extraire du flux d'informations qu'il reçoit par l'antenne 103. Un capteur 105, dans cet exemple infrarouge, reçoit des signaux émis par une télécommande 106. Une cellule infrarouge du capteur 105 délivre un signal qui permet à l'utilisateur de contrôler le circuit de commande 104. Les signaux numérisés audio et /ou vidéo issus du module de réception 102 sont envoyés dans une mémoire vidéo 107 via une liaison unidirectionnelle 108. Selon une variante de réalisation du dispositif selon l'invention, le décodeur de télévision numérique 100 peut comporter des unités de compression et de décompression des signaux audio et/ou vidéo.

Une mémoire de programmes 109 est destinée à la gestion des différentes opérations qui peuvent intervenir au sein du dispositif selon l'invention. Un microprocesseur 110 est relié au moyen d'un bus de communication bidirectionnel 111 à la mémoire de programmes 109 et à un module de mémoire 112. Le bus de communication bidirectionnel 111 véhicule des signaux de commandes, d'adresses ou de données. Grâce à lui, le microprocesseur 110 peut gérer un ensemble d'opérations intervenant dans le fonctionnement du décodeur, et peut contrôler notamment un ensemble d'applications de la mémoire de programmes 109, et plus particulièrement celles destinées au fonctionnement du dispositif selon l'invention. Ces applications peuvent, dans certains modes de réalisation du dispositif selon l'invention, être remplacées par des circuits électroniques spécialisés dont le fonctionnement peut lui aussi être géré par le microprocesseur 110. Un bus de données 120 assure le transfert des données entre la mémoire vidéo 107 et le module de mémoire 112. Un module d'OSD 113 (On Screen Display dans la littérature anglaise), qui permet notamment d'afficher certains éléments graphiques dont les données sont contenues dans le module de mémoire 112, est relié au bus bidirectionnel de communication, et est connecté à un module de superposition 114 qui reçoit par ailleurs les informations contenues dans la mémoire vidéo 107.

Le fonctionnement du dispositif selon l'invention est à présent expliqué.

Lorsque le décodeur de télévision numérique 100 reçoit un flux d'informations composé notamment de signaux audio et vidéo, ces signaux sont transmis sous forme de paquets de données audio et vidéo à la mémoire vidéo 107 avant leur restitution par le téléviseur 101. Dans un premier mode de fonctionnement, les données qui codent ces signaux ne sont pas recopiées dans le module de mémoire 112. Dans ce premier mode, le fonctionnement du dispositif de sélection de séquences selon l'invention est le suivant : une application 140, dite application de début de marquage, de la mémoire de programmes 109 a pour effet de déclencher dès sa mise en oeuvre une opération d'écriture dans le module de mémoire 112 des paquets de données audio et/ou vidéo qui transitent par la mémoire vidéo 107. Simultanément, des données correspondant à une adresse d'une unité de mémoire du module de mémoire 112 sont inscrites dans une table de valeurs 115. Les données relatives à cette table de valeurs 115 peuvent être inclues dans une zone de mémoire spécifique du module de mémoire 112. Cette adresse correspond à l'adresse dite de début de sélection d'une séquence. Elle permet de déterminer dans le module de mémoire 112 le début de la séquence sélectionnée, c'est à dire le paquet de données audio et /ou vidéo qui a fait l'objet du début de la sélection. De la même façon, une application 141, dite application de fin de marquage, est mise en oeuvre pour déclencher l'arrêt de l'opération d'écriture dans le module de mémoire 112 des paquets de données audio et/ou vidéo qui transitent par la mémoire vidéo 107. L'application de fin de marquage 141 détermine donc la fin de la sélection de la séquence. Simultanément, des données correspondant à une adresse d'une unité de mémoire du module de mémoire 112 sont inscrites dans la table de valeurs 115. Cette adresse correspond à l'adresse dite de fin de sélection d'une séquence. Elle permet de déterminer dans le module de mémoire 112 la fin de la séquence sélectionnée, c'est à dire le paquet de données audio et/ou vidéo qui a fait l'objet de la fin de la sélection

Dans le cas où, pour une même séquence sélectionnée, les données audio et vidéo sont toutes mémorisées dans des unités de mémoire dont les adresses ne sont pas toutes consécutives sur le disque dur 112, des adresses dites de fin intermédiaire de sélection et des adresses dites de début intermédiaire de sélection sont également mémorisées dans la table de valeurs 115. De cette manière, lorsqu'une séquence sélectionnée est lue, la totalité de la séquence peut être visionnée et/ou entendue sans discontinuité.

Une application 142, dite application d'ajustement des marqueurs, de la mémoire de programmes 109 peut être mise en oeuvre par un utilisateur du dispositif selon l'invention. Cette application permet de modifier le point de début et le point de fin des séquences sélectionnées. A cet effet, l'utilisateur peut modifier les adresses de début et les adresses de fin de sélection contenues dans la table de valeurs 115. Dans le premier mode de fonctionnement, l'application d'ajustement des marqueurs 142 ne permet cependant que de raccourcir les séquences sélectionnées. En effet, seuls les paquets de données marqués, ainsi que les paquets de données diffusés entre un paquet de données de début de sélection et un paquet de données de fin de sélection, ont fait l'objet d'une opération d'écriture sur le disque dur 112, et, en conséquences, le marqueur de début de sélection ne peut être déplacé que pour marquer un paquet de données audio et/ou vidéo ultérieur à celui initialement marqué. De même, le marqueur de fin de sélection ne peut être déplacé que pour marquer un paquet de données audio et/ou vidéo antérieur à celui initialement marqué.

Dans un deuxième mode de fonctionnement du dispositif selon l'invention, l'ensemble des paquets de données qui sont transmis à la mémoire vidéo 107 sont automatiquement recopiés dans le module de mémoire 112. Quand ce dernier est totalement plein, les données qui avaient été inscrites en premier, si elles n'appartiennent pas à une séquence sélectionnée, sont effacées par les nouvelles données correspondant aux nouveaux paquets de données audio et vidéo transitant dans la mémoire vidéo 107. Dans ce deuxième mode de fonctionnement, l'application d'ajustement des marqueurs 142 peut être mise en oeuvre d'une manière légèrement différente: en effet, dans le cas où l'utilisateur aurait manqué le début d'une séquence qu'il souhaite sélectionner, il peut déplacer le marqueur de début de sélection de telle sorte que l'ensemble de la séquence qu'il convoite devient sélectionné, et ceci dans la mesure où le début de la séquence convoitée est toujours sur le disque dur 112, et que le paquet de données correspondant au début de la séquence convoitée peut faire l'objet d'un marquage. De la même façon, dans le cas où l'utilisateur aurait stoppé la sélection de la séquence trop tôt, il peut déplacer le marqueur de fin de sélection de telle sorte que l'ensemble de la séquence qu'il convoite devient sélectionné, et ceci dans la mesure où la fin de la séquence convoitée est toujours sur le disque dur 112, et que le paquet de données correspondant à la fin de la séquence convoitée peut faire l'objet d'un marquage.

Dans un mode de réalisation préféré du dispositif selon l'invention, l'utilisateur peut avoir le choix entre les deux modes de fonctionnement.

Une application 143, dite application de défragmentation, de la mémoire de programmes 109 peut être mise en oeuvre à tout instant par un l'utilisateur. Cette application de défragmentation permet d'effacer l'ensemble du disque dur 112 à l'exception des séquences sélectionnées. Par ailleurs, cette application permet de regrouper différents morceaux d'une même séquence sélectionnée en une unique zone de mémoire dont les adresses sont consécutives. Les adresses de début intermédiaire de sélection et des adresses de fin intermédiaire de sélection sont ainsi supprimées au sein de la table de valeurs 115. Cette application de défragmentation 143 met à jour automatiquement la table de valeurs 115, éventuellement en modifiant les adresses de début de sélection et les adresses de fin de sélection qu'elle contenait, afin de contenir les nouvelles adresses qui désignent le nouvel emplacement dans le module de mémoire 112 des paquets de données marquant le début et la fin des séquences sélectionnées.

Une application 144, dite application de lecture en continu, de la mémoire de programmes 109 permet à un utilisateur de restituer sur des organes de sortie de son téléviseur l'ensemble des séquences sélectionnées contenues dans le module de mémoire 112. A cet effet, une opération de lecture du module de mémoire 112 est exécutée, le module de mémoire 112 étant lu uniquement entre des adresses de début de sélection et de fin de sélection ou de fin de sélection intermédiaire, ainsi qu'entre des adresses intermédiaires de début de sélection et des adresses de fin de sélection ou de fin de sélection intermédiaire contenues dans la table de valeurs 115.

Un ensemble de moyens est mis en oeuvre dans le dispositif selon l'invention pour le rendre facile d'utilisation. Grâce au module d'OSD 113, l'utilisateur peut afficher sur l'écran de télévision une fenêtre graphique 116 dans laquelle un menu, dont les données sont contenues dans une zone réservée 121 du module de mémoire 112, peut être affiché. Grâce à ce menu, l'utilisateur peut accéder au différentes fonctions du dispositif selon l'invention, telle que l'application de lecture en continu 144, l'application de défragmentation 143, l'application d'ajustement de marqueurs 142, ou encore une fonction de visualisation de la table de valeurs.... Le menu peut également proposer d'afficher la table de valeurs 115 sous une forme intelligible par l'utilisateur. La table de valeurs peut par exemple être présentée sous la forme d'un tableau, chaque ligne correspondant à une séquence sélectionnée. Dans le tableau affiché, l'adresse de début de sélection et l'adresse de fin de sélection sont remplacées par des informations plus parlantes pour l'utilisateur, telle que l'heure du début de sélection et l'heure de fin de sélection ou encore la chaîne de laquelle la séquence sélectionnée est issue. La durée de la séquence sélectionnée peut également apparaître dans la table de valeurs.

Dans un mode de réalisation perfectionné de l'invention, une application 145, dite application de marquage automatique, de la mémoire de programmes 109 peut être mise en oeuvre. Cette application de marquage automatique permet de sélectionner automatiquement certaines séquences, qui correspondent par exemple à un type d'émissions, et uniquement ces séquences. A cet effet, une application 146, dite d'identification de séquence, permet au dispositif selon l'invention d'analyser le flux d'informations reçu par le décodeur 100, et de déterminer, grâce à la présence de signaux spécifiques dans le flux d'informations reçu, quel type d'émission est transmise. Le dispositif selon l'invention peut ainsi par exemple détecter des interruptions publicitaires pendant une séquence qui est sélectionnée, et disposer alors des marqueurs intermédiaires de début de sélection et de fin de sélection qui permettent de repérer l'interruption publicitaire. L'application de défragmentation 143 peut par la suite être mise en oeuvre automatiquement pour supprimer du module de mémoire 112 l'ensemble des interruptions publicitaires. L'application de marquage automatique 145 peut également être accessible au moyen du menu affiché dans la fenêtre graphique 116.

Dans un autre mode de réalisation du dispositif selon l'invention, les informations audio et vidéo peuvent être marquées séparément. Dans ce cas, une deuxième table de valeurs 117 intervient. La deuxième table de valeurs permet de mémoriser l'ensemble des adresses relatives à des séquences audio sélectionnées, alors que la table de valeurs 115 permet de mémoriser l'ensemble des adresses relatives à des séquences vidéo sélectionnées. Les différentes applications de la mémoire de programmes 109 qui ont été présentées auparavant peuvent être mises en oeuvre séparément pour les séquences vidéo sélectionnées et pour les séquences audio sélectionnées. Une information dite de correspondance peut cependant être conservée dans les tables de valeurs pour indiquer, le cas échéant, qu'une séquence audio et une séquence vidéo sélectionnées étaient initialement associées.

Afin d'aider l'utilisateur dans ses manipulations du dispositif selon l'invention, un témoin lumineux 119 peut apparaître sur l'écran de télévision, ou sur le boîtier du décodeur de télévision numérique, pour indiquer à l'utilisateur qu'il est en train de sélectionner une séquence.

L'ensemble des applications intervenant dans la mise en oeuvre du dispositif selon l'invention peuvent être mises en oeuvre au moyen de la télécommande 106. A cet effet un deuxième capteur 118, de préférence semblable au premier capteur 105 est susceptible de recevoir des signaux infrarouges depuis la télécommande et de transmettre au microprocesseur 110 des signaux électriques correspondant, afin que ce dernier déclenche la mise en oeuvre des applications appropriées.

D'autres solutions sont envisageables pour marquer le début et la fin d'une séquence. Par exemple, un bit peut être ajouté dans le premier paquet de données sélectionné ainsi que dans le dernier paquet de données sélectionné. Ces bits supplémentaires font alors office de marqueurs. Autrement dit, des bits supplémentaires sont ajoutés aux paquets de données audio et/ou vidéo marqués. Dans ce cas, une application de lecture du module de mémoire doit être en mesure de détecter ces marqueurs pour identifier, parmi l'ensemble des données contenues dans le module de mémoire, les séquences qui ont fait l'objet d'une sélection.

## Revendications

1. Dispositif de sélection de séquences audio et/ou vidéo pour décodeur de télévision numérique (100), ledit décodeur (100) recevant un ensemble de séquences audio et vidéo sous la forme d'un flux de signaux audio et vidéo et comportant notamment un module de mémoire (112) de données de type disque dur, un microprocesseur (110) et une mémoire de programmes (109), ledit dispositif étant **caractérisé en ce qu'**il comporte des moyens (140 ; 141) pour marquer des paquets de données audio et/ou vidéo reçues par le décodeur (100), des moyens (115) pour mémoriser dans le module de mémoire (112) du décodeur la ou les séquences audio et/ou vidéo reçues entre les paquets de données ainsi marqués, et une table de valeurs (115) qui permet de mémoriser une adresse de début de sélection et une adresse de fin de sélection pour chaque séquence ainsi sélectionnée.

2. Dispositif de sélection de séquences audio et/ou vidéo selon la revendication 1 **caractérisé en ce que** les moyens (140 ; 141) pour marquer les paquets de données audio et/ou vidéo sont mis en oeuvre directement sur le flux de signaux audio et vidéo reçus par le décodeur (100).

3. Dispositif de sélection de séquences audio eVou vidéo selon la revendication 1 **caractérisé en ce que** les moyens (140 ; 141) pour marquer les paquets de données audio et/ou vidéo sont mis en oeuvre sur des séquences préalablement enregistrées sur le module de mémoire du décodeur (100).

4. Dispositif de sélection de séquences audio et/ou vidéo selon l'une des revendications 1 à 3 **caractérisé en ce que** les moyens pour marquer les paquets de données audio et/ou vidéo font intervenir des bits supplémentaires ajoutés aux paquets de données audio et/ou vidéo marqués.

5. Dispositif de sélection de séquences audio et/ou vidéo selon l'une des revendications précédentes **caractérisé en ce qu'**il comprend des moyens (142) pour modifier les adresses de début de sélection et les adresses de fin de sélection mémorisées dans la table de valeurs (115).

6. Dispositif de sélection de séquences audio et/ou vidéo selon l'une des revendications précédentes **caractérisé en ce qu'**il comprend des moyens (144) pour restituer de façon continue l'ensemble des séquences sélectionnées.

7. Dispositif de sélection de signaux audio et/ou vidéo selon l'une des revendications précédentes **caractérisé en ce qu'**il comprend des moyens (143) pour éliminer du module de mémoire un ensemble de signaux audio et/ou vidéo qui n'ont pas été fait l'objet d'une sélection.

8. Dispositif de sélection de signaux audio et/ou vidéo selon l'une des revendications précédentes **caractérisées en ce qu'**il comprend des moyens (115; 117) pour marquer un paquet de données indépendamment d'un paquet de données reçu par le décodeur simultanément au paquet de données audio.

9. Dispositif de sélection de signaux audio et/ou vidéo selon l'une des revendications précédentes **caractérisées en ce qu'**il comprend des moyens (115; 117) pour marquer un paquet de données vidéo indépendamment d'un paquet de données audio reçu par le décodeur simultanément au paquet de données vidéo.

10. Dispositif de sélection de signaux audio et/ou vidéo selon l'une des revendications précédentes **caractérisées en ce qu'**il comprend des moyens (119) pour indiquer à un utilisateur qu'il est en train de sélectionner une séquence de signaux audio et/ou vidéo.
